# EUROPÄISCHE PATENTSCHRIFT

(11) **EP 2 883 618 B1**
(45) Veröffentlichungstag und Bekanntmachung des Hinweises auf die Patenterteilung: **28.10.2020**
(21) Anmeldenummer: 14191625.4
(22) Anmeldetag: 04.11.2014
(51) Int. Cl.: B05B 7/04, A01M 7/00, B05B 7/24, B05B 15/16

(54) **Injektordüse**
Injector nozzle
Tuyère d'injecteur

(30) Priorität: 11.12.2013 DE 102013225612
(43) Veröffentlichungstag der Anmeldung: 17.06.2015
(73) Patentinhaber: Lechler GmbH, 72555 Metzingen (DE)
(72) Erfinder: Schenk, Thomas, 72639 Neuffen (DE); Buck, Oliver, 72555 Metzingen (DE)
(74) Vertreter: Patentanwälte Ruff, Wilhelm, Beier, Dauster & Partner mbB

(56) Entgegenhaltungen:
- WO-A1-98/00227
- DE-A1- 4 338 585
- DE-A1- 19 536 220
- US-A- 4 802 630

## Beschreibung

Die Erfindung betrifft eine Injektordüse zum Ansaugen von Flüssigkeiten, mit einer Injektorkammer, einer Flüssigkeitseintrittsöffnung für eine unter Überdruck stehende erste Flüssigkeit, die in die Injektorkammer mündet, und einer Flüssigkeitsansaugöffnung für eine anzusaugende Flüssigkeit, die in die Injektorkammer mündet. Die Erfindung betrifft auch eine Pflanzenschutzspritze mit einer erfindungsgemäßen Injektordüse.

Injektordüsen sind prinzipiell bekannt und arbeiten nach dem sogenannten Venturi-Prinzip. Ein Flüssigkeitsstrahl tritt in eine Injektorkammer ein, erzeugt in der Injektorkammer einen Unterdruck und reißt dann Gas oder Luft mit sich. Nach diesem Prinzip funktioniert die sogenannte Wasserstrahlpumpe.

Aus der US-Patentschrift US 4,802,630 A ist eine Injektordüse zum Ansaugen von Flüssigkeiten und zum Erzeugen von Schaum bekannt. Die Injektordüse arbeitet nach dem Venturi-Prinzip und weist eine Injektorkammer, eine Flüssigkeitseintrittsöffnung für eine unter Überdruck stehende Trägerflüssigkeit, die in die Injektorkammer mündet, zwei gegenüberliegende Flüssigkeitsansaugöffnungen für eine anzusaugende Flüssigkeit, die in die Injektorkammer münden, auf. Die beiden Flüssigkeitsansaugöffnungen sind einander gegenüberliegend angeordnet und münden am Beginn der Injektorkammer in die Injektorkammer. Die Injektorkammer weist stromabwärts der Flüssigkeitseintrittsöffnungen einen ersten, sich in Strömungsrichtung kegelförmig erweiternden Abschnitt und einen zweiten, sich in Strömungsrichtung kegelförmig erweiternden Abschnitt auf. Der zweite kegelförmige Abschnitt schließt sich an den ersten kegelförmigen Abschnitt an und der zweite kegelförmige Abschnitt weist einen geringfügig größeren Kegelwinkel als der erste kegelförmige Abschnitt auf. Der erste Kegelwinkel beträgt 10°, der zweite Kegelwinkel beträgt 14°.

Aus der internationalen Offenlegungsschrift WO 98/00227 A1 ist eine Injektordüse zum Ansaugen von Flüssigkeiten bekannt, die eine Injektorkammer, eine Flüssigkeitseintrittsöffnung für eine unter Überdruck stehende erste Flüssigkeit, die in die Injektorkammer mündet, und eine Flüssigkeitsansaugöffnung für eine anzusaugende Flüssigkeit aufweist, die in die Injektorkammer mündet. Die beschriebene Injektordüse ist zum Erzeugen von Schaum vorgesehen, wobei der Effekt der Kavitation genutzt wird. Die Ansaugöffnung für die anzusaugende Luft liegt stromaufwärts von sich kegelförmig erweiternden Abschnitten der Injektorkammer und weist die Form eines Ringspalts auf. Die eintretende Luft soll koaxial zu der Flüssigkeitseintrittsöffnung der Düse eintreten.

Aus der deutschen Offenlegungsschrift DE 101 29 402 A1 ist eine Injektordüse für eine Löschpistole bekannt. Die Löschpistole weist einen Behälter auf, in dem ein Tensid angeordnet ist. Das Löschwasser saugt über die Injektorkammer das Tensid an, um die Löschpistole damit auch für das Löschen von Fettbränden geeignet zu machen.

Aus der deutschen Offenlegungsschrift DE 195 36 220 A1 ist ein Düsenmundstück mit einer Austrittsöffnung zum Ausbringen eines Fluids sowie eine Düse mit einem derartigen Düsenmundstück bekannt.

Aus der deutschen Offenlegungsschrift DE 43 38 585 A1 ist eine Injektordüse zur Erzeugung luftgefüllter Flüssigkeitstropfen bekannt.

Auf dem Gebiet des Pflanzenschutzes war es bisher nicht möglich, konventionelle Injektordüsen einzusetzen, da sich das Mischungsverhältnis zwischen angesaugter Flüssigkeit und Trägerflüssigkeit mit dem Druck beziehungsweise der Menge der Trägerflüssigkeit stark ändert. Eine solche Änderung des Mischungsverhältnisses, auch nur bei unbeabsichtigten Druckschwankungen der Trägerflüssigkeit, verbietet aber einen Einsatz konventioneller Injektordüsen in der Landtechnik.

Mit der Erfindung soll eine Injektordüse zum Ansaugen von Flüssigkeiten bereitgestellt werden, mit der auch bei sich veränderndem Druck der zugeführten ersten Flüssigkeit ein im Wesentlichen konstantes Mischungsverhältnis zwischen der ersten Flüssigkeit und einer anzusaugenden Flüssigkeit erzielt wird.

Erfindungsgemäß ist hierzu eine Injektordüse zum Ansaugen von Flüssigkeiten mit den Merkmalen von Anspruch 1 vorgesehen. Vorteilhafte Weiterbildungen der Erfindung sind in den Unteransprüchen angegeben.

Erfindungsgemäß ist also eine Injektordüse zum Ansaugen von Flüssigkeiten mit einer Injektorkammer, einer Flüssigkeitseintrittsöffnung für eine unter Überdruck stehende erste Flüssigkeit, die in die Injektorkammer mündet, und einer Flüssigkeitsansaugöffnung für eine anzusaugende Flüssigkeit, die in die Injektorkammer mündet, vorgesehen, bei der die Injektorkammer ausgehend von der Flüssigkeitseintrittsöffnung einen ersten, sich in Strömungsrichtung kegelförmig erweiternden Abschnitt und einen zweiten, sich in Strömungsrichtung kegelförmig erweiternden Abschnitt aufweist, wobei der zweite kegelförmige Abschnitt sich an den ersten kegelförmigen Abschnitt anschließt und wobei der zweite kegelförmige Abschnitt einen größeren Kegelwinkel als der erste kegelförmige Abschnitt aufweist.

Überraschenderweise gelingt es durch die Anordnung zweier kegelförmiger Abschnitte in der Injektorkammer, so dass sich der Kegelwinkel der Injektorkammer in Strömungsrichtung gesehen vergrößert, ein im Wesentlichen konstantes Mischungsverhältnis zwischen der ersten, unter Überdruck stehenden Flüssigkeit oder der Trägerflüssigkeit und der zweiten, angesaugten Flüssigkeit zu erzielen, auch wenn sich der Druck der unter Überdruck stehenden ersten Flüssigkeit ändert. Die erfindungsgemäße Injektordüse ist dadurch für Anwendungen beim Pflanzenschutz geeignet und es wird dadurch möglich, eine Pflanzenschutzspritze zu realisieren, bei der das Pflanzenschutzmittel unmittelbar an der Düse ohne zusätzliche Injektionspumpen oder dergleichen eingebracht wird. Die erfindungsgemäße Injektordüse ermöglicht es daher, eine sehr einfach und zuverlässig arbeitende Pflanzenschutzspritze zu bauen, die dennoch ein konstantes Mischungsverhältnis ermöglicht. Beispielsweise kann die erfindungsgemäße Injektordüse bei tragbaren Pflanzenschutzspritzen eingesetzt werden, bei denen die Trägerflüssigkeit mit einer Handpumpe unter Druck gesetzt wird. Wenn sich der Trägerflüssigkeitsbehälter dann im Verlauf des Spritzvorgangs leert, auch der Druck, mit dem die Trägerflüssigkeit in die Injektorkammer eintritt. Mit der erfindungsgemäßen Injektordüse ist es dennoch möglich, ein im Wesentlichen konstantes Mischungsverhältnis zwischen angesaugter Flüssigkeit und der unter Überdruck stehenden ersten Flüssigkeit oder Trägerflüssigkeit aufrecht zu erhalten.

Gemäß der Erfindung weist der erste Abschnitt einen Kegelwinkel zur Mittellängsachse der Injektorkammer in einem Bereich zwischen 5° und 10° auf.

Versuche haben gezeigt, dass eine solche Bemessung des Kegelwinkels sehr positive Ergebnisse ergibt.

Gemäß der Erfindung weist der zweite Abschnitt einen Kegelwinkel zur Mittellängsachse der Injektorkammer zwischen 30° und 40° auf.

Ein solcher Kegelwinkel des zweiten Abschnitts sorgt ebenfalls für ein im Wesentlichen konstantes Mischungsverhältnis zwischen Trägerflüssigkeit und anzusaugender Flüssigkeit. Die Kegelwinkel des ersten und des zweiten Abschnitts sind dabei über den gesamten Querschnitt des Kegels gemessen. Zur Mittellängsachse der Injektorkammer gemessen beträgt der jeweilige Kegelwinkel nur die Hälfte der genannten Werte.

Gemäß der Erfindung weist der erste Abschnitt in Strömungsrichtung eine Länge auf, die zwischen dem 2-fachen und 4-fachen, insbesondere das 3-fache, der Länge des zweiten Abschnitts beträgt.

Eine solche Bemessung der Längen der beiden kegelförmigen Abschnitte sorgt für besonders konstante Mischungsverhältnisse auch bei sich änderndem Überdruck der Trägerflüssigkeit.

In Weiterbildung der Erfindung ist stromabwärts der Injektorkammer eine Mischkammer angeordnet.

Auf diese Weise kann die angesaugte Flüssigkeit und die Trägerflüssigkeit noch innerhalb der Düse gründlich vermischt werden.

In Weiterbildung der Erfindung geht von der Mischkammer eine Austrittsöffnung für einen austretenden Spritzstrahl aus.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale aus den verschiedenen Zeichnungen können dabei in beliebiger Weise miteinander kombiniert werden, ohne den Rahmen der Erfindung zu überschreiten. In den Zeichnungen zeigen:
- Fig. 1: eine isometrische, auseinandergezogene Darstellung der erfindungsgemäßen Injektordüse gemäß einer ersten Ausführungsform,
- Fig. 2: eine isometrische Darstellung eines Düsengehäuses der Injektordüse der Fig. 1 von schräg oben,
- Fig. 3: eine Seitenansicht der Injektordüse der Fig. 1,
- Fig. 4: eine Ansicht auf die Schnittebene C-C aus Fig. 3,
- Fig. 5: eine Ansicht auf die Schnittebene D-D aus Fig. 4 und
- Fig. 6: die vergrößerte Einzelheit E aus Fig. 5.

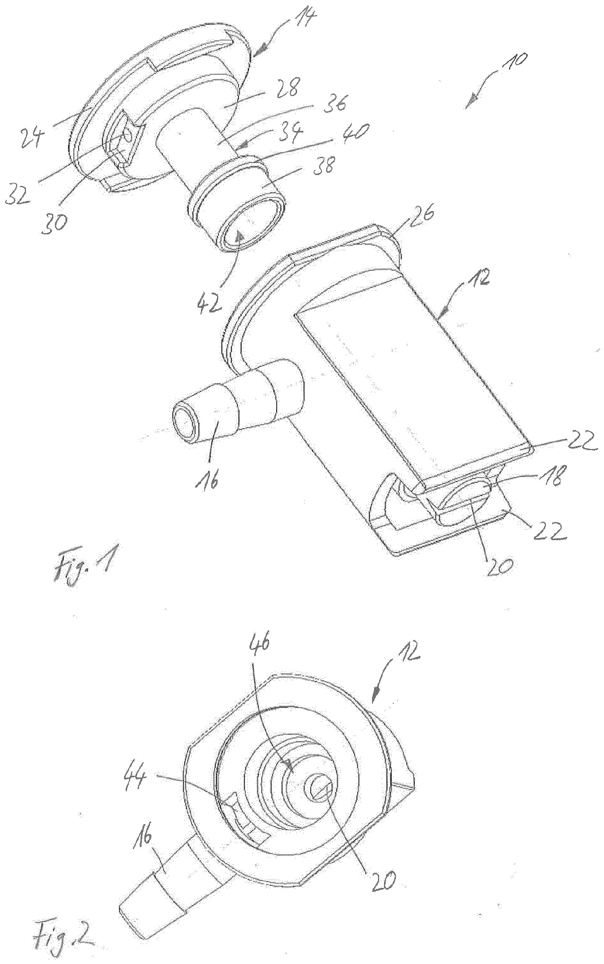

In Fig. 1 ist eine erfindungsgemäße Injektordüse 10 auseinandergezogen dargestellt. Die Injektordüse weist ein Gehäuse 12 und einen Injektoreinsatz 14 auf. Das Gehäuse 12 ist einstückig ausgebildet, beispielsweise als Kunststoffspritzgussteil, und hat einen Ansaugstutzen 16, auf den ein Zuführschlauch für anzusaugende Flüssigkeit aufgesteckt werden kann. Das Gehäuse 12 weist weiter ein Düsenmundstück 18 mit einer schlitzförmigen Austrittsöffnung 20 auf. Die Injektordüse 10 ist durch die schlitzförmige Austrittsöffnung 20 als Flachstrahldüse konzipiert. Die Form und die Abmessung der Austrittsöffnung 20 können aber im Rahmen der Erfindung modifiziert werden und beispielsweise kann die erfindungsgemäße Injektordüse auch als Vollkegel- oder Hohlkegeldüse ausgebildet werden.

Das Gehäuse 12 weist zwei seitliche Stege 22 auf, die geringfügig über das Düsenmundstück 18 hinausragen und dieses dadurch vor Beschädigungen schützen.

Der Injektoreinsatz 14 weist eine Verschlussplatte 24 auf, die auf einen passenden Flansch 26 am Gehäuse 12 aufgesetzt werden kann und den Innenraum des Gehäuses 12 abgesehen von einer in Fig. 1 nicht erkennbaren Eintrittsöffnung für unter Druck stehende Trägerflüssigkeit dadurch dicht verschließt. Von der Verschlussplatte 24 geht ein Zylinder 28 aus, dessen Außenumfang auf den Innenumfang des Gehäuses 12 anschließend an den Flansch 26 abgestimmt ist. Der Zylinder 28 sorgt dadurch für einen exakten Sitz des Injektoreinsatzes14 in dem Gehäuse 12. Der Zylinder 28 weist eine etwa quaderförmige Ausnehmung 30 auf, von der ein Ansaugkanal 32 in Richtung auf die in Fig. 1 nicht sichtbare Injektorkammer in dem Injektorbauteil 14 ausgeht. Über die Ausnehmung 30 und den Ansaugkanal 32 kann anzusaugende Flüssigkeit vom Inneren des Gehäuses 12 und letztendlich vom Anschlussstutzen 16 aus in die Injektorkammer gelangen.

Von dem Zylinder 28 geht ein rohrförmiger Stutzen 34 aus, der in einem ersten Abschnitt 36 einen geringeren Durchmesser aufweist als in einem zweiten Abschnitt 38, der das freie Ende des rohrförmigen Stutzens 34 bildet. Zwischen den beiden Abschnitten 36, 38 ist eine ringförmiger Flansch 40 mit noch größerem Durchmesser als der zweite Abschnitt 38 angeordnet. Der erste Abschnitt 36 kommt nicht mit Flüssigkeit in Berührung, sondern ist deshalb vorgesehen, um eine im Wesentlichen konstante Wandstärke des Injektoreinsatzes 14 bereitzustellen. Dies ist insbesondere dann wichtig, wenn das Injektorbauteil 14 als Kunststoffspritzgussteil ausgebildet wird.

Der umlaufende ringförmige Flansch 40 ist als umlaufende Dichtung ausgebildet und sorgt für eine zuverlässige Abdichtung einer Misch- und der Austrittskammer im Gehäuse 12. Der zweite Abschnitt 38 stellt eine Mündung in die Misch- und Austrittskammer im Gehäuse 12 zur Verfügung.

In der Darstellung der Fig. 1 nicht zu erkennen ist eine Eintrittsöffnung für eine unter Überdruck stehende Trägerflüssigkeit auf der in Fig. 1 nicht sichtbaren Seite der Verschlussplatte 24.

Die Trägerflüssigkeit wird unter Überdruck in den Injektoreinsatz 14 eingeleitet, tritt dort in die Injektorkammer 42 ein und erzeugt in der Injektorkammer 42 einen Unterdruck, durch den anzusaugende Flüssigkeit, beispielsweise Pflanzenschutzmittel, über den Ansaugkanal 32 angesaugt wird. Das angesaugte Pflanzenschutzmittel und die Trägerflüssigkeit verlassen dann den Injektoreinsatz und treten in eine Misch- und Austrittskammer in dem Gehäuse 12 ein. Aus der Misch- und Austrittskammer tritt das Gemisch aus angesaugter Flüssigkeit, speziell Pflanzenschutzmittel, und Trägerflüssigkeit dann über die Austrittsöffnung 20 in Form eines Flachstrahls aus.

Die Darstellung der Fig. 2 zeigt das Gehäuse 12 in einer Ansicht von schräg oben. Zu erkennen ist der Ansaugstutzen 16, der in einen Kanal 44 mündet, der im zusammengebauten Zustand der Injektordüse 10 an der quaderförmigen Ausnehmung 30 im Zylinder 28 des Injektoreinsatzes 14 endet. Pflanzenschutzmittel wird also durch den Ansaugstutzen 16, den Kanal 44, die Ausnehmung 30 und den Ansaugkanal 32 angesaugt und gelangt dadurch in die Injektorkammer 42.

Im Inneren des Gehäuses 12 ist die Misch- und Austrittskammer 46 zu erkennen, die dann in die Austrittsöffnung 20 übergeht.

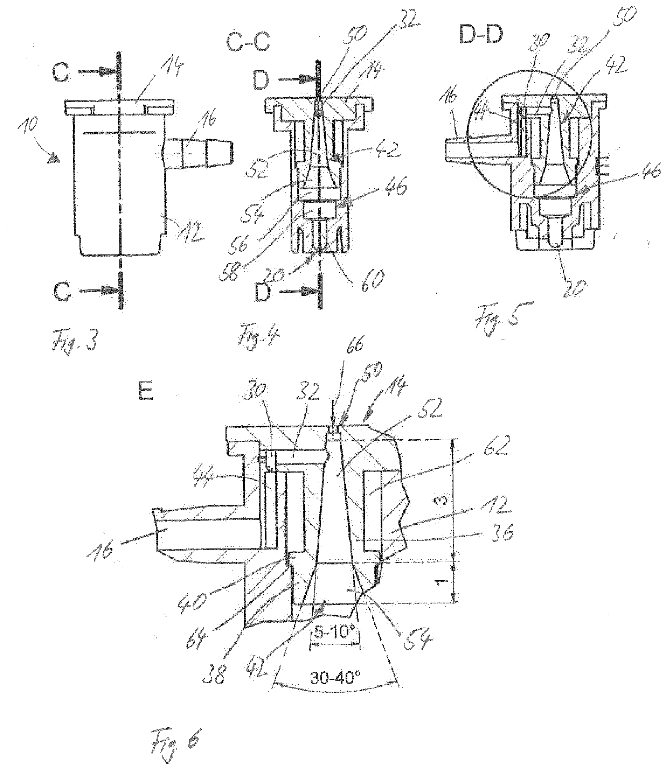

Die Darstellung der Fig. 3 zeigt eine Seitenansicht der Injektordüse 10 mit dem Injektorbauteil 14 und dem Gehäuse 12.

Fig. 4 zeigt eine Ansicht auf die Schnittebene C-C in Fig. 3. Zu erkennen ist die Eintrittsöffnung 50 für unter Druck stehende Flüssigkeit an dem Injektoreinsatz 14. An diese Eintrittsöffnung 50 schließt sich die Injektorkammer 42 an, die einen ersten Abschnitt 52 und einen zweiten Abschnitt 54 aufweist. Sowohl der erste Abschnitt 52 als auch der zweite Abschnitt 54 erweitern sich kegelförmig. Ausgehend von der Eintrittsöffnung 50 erweitert sich die Injektorkammer 42 damit bis zu ihrem Ende, an dem sie in die Misch- und Austrittskammer 46 übergeht. Die Misch-und Austrittskammer 46 weist wiederum drei Abschnitte auf, nämlich einen ersten, zylindrischen Abschnitt 56 und einen sich daran anschließenden, ebenfalls zylindrischen Abschnitt 58 mit gegenüber dem ersten Abschnitt 56 verringerten Durchmesser. Ein dritter Abschnitt 60 weist einen gegenüber dem zweiten Abschnitt 58 noch einmal deutlich verringerten Durchmesser auf und ist ebenfalls zylindrisch mit einem halbkugelförmigen unteren Ende ausgebildet. In dem halbkugelförmigen unteren Ende des dritten Abschnitts 60 ist dann die schlitzförmige Austrittsöffnung 20 vorgesehen. Der Kegelwinkel des ersten Abschnitts 52 der Injektorkammer 42 ist kleiner als der Kegelwinkel des zweiten Abschnitts 54 der Injektorkammer 42. Der erste Abschnitt 52 der Injektorkammer 42 ist auch länger als der zweite Abschnitt 54.

Die über die Eintrittsöffnung 50 in die Injektorkammer 42 eintretende Trägerflüssigkeit saugt Pflanzenschutzmittel oder allgemein anzusaugende Flüssigkeit aus dem Ansaugkanal 32 an, so dass in der Injektorkammer 42 und dann auch in der Mischkammer 46 ein Gemisch aus Pflanzenschutzmittel und Trägerflüssigkeit vorhanden ist. Im Laufe der Bewegung durch die Injektorkammer 42 und die Misch- und Austrittskammer 46 vermischen sich Pflanzenschutzmittel und Trägerflüssigkeit innig und treten dann als Gemisch durch die Austrittsöffnung 20 aus.

Die Darstellung der Fig. 5 zeigt eine Ansicht auf die Schnittebene D-D in Fig. 4. Pflanzenschutzmittel wird über den Anschlussstutzen 16, den Kanal 44, die Ausnehmung 30 und den Ansaugkanal 32 in die Injektorkammer 42 gesaugt und vermischt sich dort mit der durch die Eintrittsöffnung 50 eintretenden Flüssigkeit. An die Injektorkammer 42 schließt sich die Misch-und Austrittskammer 46 an, die dann an der Austrittsöffnung 20 endet.

Die Darstellung der Fig. 6 zeigt die Einzelheit E aus Fig. 5 vergrößert.

Zu erkennen ist ein Ringraum 62 zwischen einer Innenwand des Gehäuses 12 und einer Außenwand des Abschnitts 36 des Injektoreinsatzes 14. Dieser Ringraum 62 ist nicht mit anzusaugender Flüssigkeit gefüllt und entsteht durch die im Bereich des Abschnitts 36 verringerte Wandstärke des Injektoreinsatzes 14. Auf diese Weise können die Wandstärkenschwankungen des Injektorbauteils 14 gering gehalten werden, so dass dieses mit geringen Toleranzen auch durch Kunststoffspritzguss herstellbar ist.

Der Ringflansch 40 des Injektoreinsatzes 14 sorgt für einen Anschlag des Injektoreinsatzes 14 an einer Stufe 64 im Gehäuse 12 und damit für eine exakte Positionierung des Injektoreinsatzes 14 im Gehäuse 12. Der zweite Abschnitt 38 des Injektoreinsatzes 14 ist dann anliegend an die Innenwand des Gehäuses 12 angeordnet. Der zweite Abschnitt 38 dichtet dadurch den Injektoreinsatz 14 und damit die Misch- und Austrittskammer 46 im Gehäuse 12 gegenüber dem Ringraum 62 und auch gegenüber dem Strömungsweg der anzusaugenden Flüssigkeit ab.

In Fig. 6 ist die in die Eintrittsöffnung 50 eintretende Trägerflüssigkeit mittels eines Pfeiles 66 symbolisiert. In Fig. 6 ist zu erkennen, dass die Eintrittsöffnung 50 zwei etwa gleichlange Abschnitte aufweist, die jeweils kreiszylindrisch ausgebildet sind, wobei ein Durchmesser eines in Strömungsrichtung zweiten Abschnitts größer ist als der des ersten Abschnitts. Unmittelbar nach dem zweiten Abschnitt beginnt der erste Abschnitt 52 der Injektorkammer 42. Der erste Abschnitt erweitert sich kegelförmig und kann einen Kegelwinkel zwischen 5° und 10° aufweisen. Der Ansaugkanal 32 mündet kurz nach Beginn des ersten kegelförmigen Abschnitts 52 in die Injektorkammer 42.

An den ersten Abschnitt 52 schließt sich der zweite Abschnitt 54 der Injektorkammer 42 an. Der zweite Abschnitt 54 kann einen Kegelwinkel zwischen 30° und 40° aufweisen. Wie ausgeführt wurde, ist der zweite Abschnitt 54 kürzer als der erste Abschnitt 52. Der erste Abschnitt 52 kann dabei zwischen zweimal und viermal so lang sein wie der zweite Abschnitt 54. Bei der dargestellten Ausführungsform ist der erste Abschnitt 52 dreimal so lang wie der zweite Abschnitt 54.

Eine solche Bemessung der Längen des ersten Abschnitts 52 und des zweiten Abschnitts 54 der Injektorkammer 42 in Verbindung mit den in Fig. 6 dargestellten Winkelbereichen der Kegelwinkel des ersten Abschnitts 52 und des zweiten Abschnitts 54 ergibt ein im Wesentlichen konstantes Mischungsverhältnis beim Ansaugen von Pflanzenschutzmittel mit der Trägerflüssigkeit Wasser. Der Druck der Trägerflüssigkeit wurde dabei in Versuchen zwischen 1 bar und 4 bar variiert. In Versuchen wurde ein Pflanzenschutzmittel mit einer Viskosität von etwa 22 mm2/Sek bei 40°C und einer Oberflächenspannung von 24,5 mN/m bei 40°C eingesetzt. Getestet wurde das Pflanzenschutzmittel zwischen 10°C Umgebungstemperatur und 30°C Umgebungstemperatur. Das Mischungsverhältnis auch bei variierenden Drücken der Trägerflüssigkeit zwischen 1 bar und 4 bar bliebt dabei im Wesentlichen konstant.

Die Erfindung kann somit eine Injektordüse zum Ansaugen von Flüssigkeiten, insbesondere für den Pflanzenschutz, bereitstellen, die auch bei sich änderndem Druck der unter Überdruck zugeführten Trägerflüssigkeit ein im Wesentlichen konstantes Mischungsverhältnis zwischen angesaugter Flüssigkeit und Trägerflüssigkeit bereitstellen kann.

## Patentansprüche

1. Injektordüse zum Ansaugen von Flüssigkeiten, mit einer Injektorkammer (42), einer Flüssigkeitseintrittsöffnung (50) für eine unter Überdruck stehende Trägerflüssigkeit, die in die Injektorkammer (42) mündet, einer Flüssigkeitsansaugöffnung für eine anzusaugende Flüssigkeit, die in die Injektorkammer (42) mündet, wobei die Injektorkammer (42) stromabwärts der Flüssigkeitseintrittsöffnung (50) einen ersten, sich in Strömungsrichtung kegelförmig erweiternden Abschnitt (52) und einen zweiten sich in Strömungsrichtung kegelförmig erweiternden Abschnitt (54) aufweist, wobei der zweite kegelförmige Abschnitt (54) sich an den ersten kegelförmigen Abschnitt (52) anschließt und der zweite kegelförmige Abschnitt (54) einen größeren Kegelwinkel als der erste kegelförmige Abschnitt (52) aufweist, wobei der erste Abschnitt (52) einen Kegelwinkel in einem Bereich zwischen 5 Winkelgrad und 10 Winkelgrad aufweist, wobei der zweite Abschnitt (54) einen Kegelwinkel zwischen 30 Winkelgrad und 40 Winkelgrad aufweist, **dadurch gekennzeichnet, dass** der erste Abschnitt (52) in Strömungsrichtung eine Länge aufweist, die zwischen dem zweifachen und vierfachen, insbesondere das Dreifache, der Länge des zweiten Abschnitts (54) beträgt und dass die Injektordüse als Flachstrahldüse, als Vollkegeldüse oder als Hohlkegeldüse ausgebildet ist.

2. Injektordüse nach Anspruch 1, **dadurch gekennzeichnet, dass** stromabwärts der Injektorkammer (42) eine Misch- und Austrittskammer (46) angeordnet ist.

3. Injektordüse nach Anspruch 2, **dadurch gekennzeichnet, dass** von der Misch- und Austrittskammer (46) eine Austrittsöffnung (20) für einen austretenden Spritzstrahl ausgeht.

4. Pflanzenschutzspritze mit wenigstens einer Injektordüse nach einem der vorstehenden Ansprüche.

## Claims

1. Injector nozzle for intake of liquids, comprising an injector chamber (42), a liquid inlet opening (50) for an overpressured carrier liquid, the inlet opening issuing into the injector chamber (42), a liquid intake opening for a liquid to be drawn in, the intake opening issuing into the injector chamber (42), wherein downstream of the liquid inlet opening (50) the injector chamber (42) has a first section (52) conically enlarging in the flow direction and a second section (54) conically enlarging in the flow direction, wherein the second conical section (54) adjoins the first conical section (52) and the second conical section (54) has a greater cone angle than the first conical section (52), wherein the first section (52) has a cone angle in a range between 5 degrees of angle and 10 degrees of angle, wherein the second section (54) has a cone angle between 30 degrees of angle and 40 degrees of angle, **characterized in that** the first section (52) in the flow direction has a length that is between two-fold and four-fold, in particular three-fold, the length of the second section (54), and **in that** the injector nozzle is a flat jet nozzle, a full cone nozzle or a hollow cone nozzle.

2. Injector nozzle according to claim 1, **characterized in that** downstream of the injector chamber (42) a mixing and outlet chamber (46) is arranged.

3. Injector nozzle according to claim 2, **characterized in that** an outlet opening (20) for an emitted spray jet runs out from the mixing and outlet chamber (46).

4. Sprayer device for pest management, comprising at least one injector nozzle according to any one of the preceding claims.

## Revendications

1. Buse d'injecteur pour l'aspiration de liquides, comprenant une chambre d'injecteur (42), une ouverture d'entrée de liquide (50) pour un liquide porteur exposé à une surpression, qui débouche dans la chambre d'injecteur (42), une ouverture d'aspiration de liquide pour un liquide à aspirer, qui débouche dans la chambre d'injecteur (42), la chambre d'injecteur (42) présentant, en aval de l'ouverture d'entrée de liquide (50), une première portion (52) s'élargissant en forme de cône dans la direction d'écoulement et une deuxième portion (54) s'élargissant en forme de cône dans la direction d'écoulement, la deuxième portion (54) en forme de cône se raccordant à la première portion (52) en forme de cône et la deuxième portion (54) en forme de cône présentant un plus grand angle de conicité que la première portion (52) en forme de cône, la première portion (52) présentant un angle de conicité dans une plage comprise entre 5 degrés angulaires et 10 degrés angulaires, la deuxième portion (54) présentant un angle de conicité compris entre 30 degrés angulaires et 40 degrés angulaires, **caractérisée en ce que** la première portion (52) présente, dans la direction d'écoulement, une longueur qui est comprise entre le double et le quadruple, en particulier le triple, de la longueur de la deuxième portion (54) et **en ce que** la buse d'injecteur est réalisée sous forme de buse à jet plat, en tant que buse à cône plein ou en tant que buse à cône creux.

2. Buse d'injecteur selon la revendication 1, **caractérisée en ce qu'**une chambre de mélange et de sortie (46) est disposée en aval de la chambre d'injecteur (42).

3. Buse d'injecteur selon la revendication 2, **caractérisée en ce qu'**une ouverture de sortie (20) pour un jet de pulvérisation sortant part de la chambre de mélange et de sortie (46).

4. Pulvérisateur à produits phytosanitaires comprenant au moins une buse d'injecteur selon l'une quelconque des revendications précédentes.
